# EUROPEAN PATENT SPECIFICATION

(11) **EP 3 303 405 B1**
(45) Date of publication and mention of the grant of the patent: **13.09.2023**
(21) Application number: 16802634.2
(22) Date of filing: 30.05.2016
(51) Int. Cl.: C08B 3/10, C08B 11/02, C08B 1/02, C08L 1/10, C08L 1/28

(54) **MOLAR MASS CONTROLLED CELLULOSE**
MOLMASSEGESTEUERTE CELLULOSE
CELLULOSE À MASSE MOLAIRE CONTRÔLÉE

(30) Priority: 29.05.2015 FI 20155406
(43) Date of publication of application: 11.04.2018
(73) Proprietor: Teknologian Tutkimuskeskus VTT Oy, 02150 Espoo (FI)
(72) Inventor: ROPPONEN, Jarmo, 02044 Vtt (FI); TALJA, Riku, 02044 Vtt (FI); WILLBERG-KEYRILÄINEN, Pia, 02044 Vtt (FI); HARLIN, Ali, 02044 Vtt (FI); ASIKAINEN, Sari, 02044 Vtt (FI); VARTIAINEN, Jari, 02044 Vtt (FI)
(74) Representative: Laine IP Oy
(86) International application number: PCT/FI2016/050375
(87) International publication number: WO 2016/193542

(56) References cited:
- EP-A1- 2 489 681
- WO-A1-02/086206
- WO-A1-2010/019245
- WO-A1-2013/021099
- US-A- 4 228 277

## Description

### FIELD

The present invention relates to affordable cellulose raw material with a novel beneficial method of preparing molar mass controlled transportable feed stock for added value applications in biomaterials manufacturing, including thermoplastic, dispersion able or dissolving derivatives.

### BACKGROUND

Cellulose is the most abundant renewable organic polymer on the earth and hence can be regarded as important raw material for several industries such as textiles, papers, foods, cosmetics and biomaterials (Edgar *et al.*, 2001). Cellulose is a linear polymer that consists of β(1→4) linked D-glucose units. Hydroxyl groups of cellulose forms strong inter and intra molecular hydrogen bonds and van der Waals interactions forming a resistant and stiff microfibril network. This structure is not uniform, and both highly ordered (crystalline) regions and regions with a low degree of order can be found. The relative proportion of these regions depends on the raw material and the treatments to which the cellulose has been produced (Klemm *et al.*, 2002). Moreover, these regions caused the limited solubility of cellulose and make it difficult for solvents and reagents to access areas within the cellulose fibres. As known this network is poorly reactive requiring a large excess of chemicals or demanding process conditions.

The modification of cellulose can be done either via homogeneous or heterogeneous procedures. In most cases, cellulose esters are produced industrially under heterogeneous conditions. Reaction rates and final degree of substitution (DS) in heterogeneous reactions are hindered by low accessibility of solid cellulose to the esterification reagents (Wei *et al*., 2007). In order to have homogeneous chemical reaction cellulose need to be first dissolved. In order to achieve uniform chemical reactions or solubilization of cellulosic substrates, it is important to have accessibility high enough. However, due to the high crystallinity, cellulose can be only dissolved in limited solvents at low concentrations. To achieve chemical reactions efficient enough, the native cellulose need to be first activated by disrupting inter- and intramolecular hydrogen bonding making structure accessible to further action of reactants. This can be achieved by varying degrees of chemical, enzymatic or mechanical activation.

The chemical activation can be achieved by different methods like using water, solvents, dilute acids and bases. As a result of chemical activation the cellulose structure becomes less ordered leading to an increase of the active surface area and thus increasing the number of available hydroxyl groups and the accessibility to chemicals. Well known method to disrupt fibrillar aggregation, and increase surface accessibility is to use fluids with a higher swelling power, such as dilute caustic soda (6-10%), dilute quaternary bases or aqueous zinc chloride. Disruption of the crystalline structure, such as with liquid ammonia or 20% caustic soda, which induces cellulose-I to cellulose-II (also regenerated cellulose) crystal modification. Treatments by acid hydrolysis and oxidation, thermal and mechanical treatments by grinding, ultrasonic treatment and freeze-drying and enzymatic treatment are also activation methods but they can degrade the molecules to a certain extent.

The enzymatic activation of cellulose can be done by using different cellulases which hydrolyse the 1,4-β-D-glucosidic bonds of the cellulose chain. There are three major groups of cellulases: endoglucanases, cellobiohydrolases or exoglucanases, and glucosidases. These enzymes can act alone on the cellulose chain or together degrading efficiently cellulose structure generating mainly glucose or cellobiose units.

The mechanical activation of the cellulose fibres is well known method in the pulp and paper industry. Depending on how and in which conditions the mechanical processing has done it can enhance fiber-fiber bonding, to cut or make the fibres stronger and to change cellulose structure.

Crepy *et al.* (2009) describe a method for synthetizing plastic materials by the internal plasticization of cellulose with fatty acids. Modifications were done in homogenous solvent under microwave irradiation, which is not currently industrially feasible. The method does not cover both homogeneous and heterogeneous reactions for molar mass controlled hydrolyzed cellulose.

For the application point of view cellulose solubility and mechanical properties need to be tailor without affecting its natural performance too much. For instance, to avoid tedious recycling processes of solvents and huge excess of chemicals in chemical activation cellulose reactivity need to be increase without losing its good mechanical properties to obtain high quality cellulose based materials which are suitable for various applications. One way to increase reactivity of the cellulose is to decrease its molar mass in controlled manner.

### SUMMARY OF THE INVENTION

The invention is defined by the features of the independent claims. Some specific embodiments are defined in the dependent claims.

According to a first aspect of the present invention, there is provided a cheap and available raw material for biomaterial manufacturing.

According to a second aspect of the present invention, there is provided a hydrolyzed and reactive molar mass controlled cellulose, having for example excellent thermoplastic properties, which is thus usable after functionalization in various applications, such as composites, films, foams, encapsulation, packaging, textiles and nonwovens.

These and other aspects, together with the advantages thereof over known solutions are achieved by the present invention, as hereinafter described and claimed.

The method of improving the reactivity of cellulose according to an embodiment of the present invention is mainly characterized by what is stated in the characterizing part of claim 1.

The method of producing films from the molar mass controlled cellulose according to embodiments of the present invention is characterized in claims 7 and 9.

Considerable advantages are obtained by means of the invention. For example, the modification of hydrolyzed cellulose as herein described provides processable thermoplastic materials without using any external plasticizers. Additionally, this material forms mechanically strong films with excellent WVTR properties and good heat-sealability. Applying such hydrolyzed cellulose also provides benefits such as utilization of a non-food and recycled raw material source and recyclability. Furthermore, molar mass controlled cellulose coatings applied on a CNF-film provide fully cellulosic and thus also fully bio-based films with high smoothness on both surfaces.

Next, the present technology will be described more closely with reference to certain embodiments.

### EMBODIMENTS

The present technology provides means to convert inactive cellulose to more reactive form and to an easier functionalization in order to produce thermoprocessable cellulose products.

"Long-chain fatty acid modification" herein means chain length of fatty acid substituents ≥ C6, such as C6-C30 and more preferably C6-C18. Such modification may for example be esterification or etherification.
FIGURE 1 illustrates a reaction scheme for synthesizing cellulose ester samples.
FIGURE 2 illustrates a reaction scheme for synthesizing cellulose ether samples.
FIGURE 3 is a photo showing translucent and flexible rod produced with microcompounder from a processable cellulose palmitate ester at a temperature of 200 °C.
FIGURES 4A, 4B and 4C are diagrams showing the mechanical properties (E-modulus, tensile strength and tensile strain at break) of an example cellulose ester films.
FIGURE 5 is a diagram showing the water vapour transmission rates for example cellulose ester films.
FIGURE 6 is a SEM-image (1000 x 1000) showing the advantageous effect of molar mass controlled cellulose (MMCC) coating in significantly decreasing surface porosity and roughness of CNF-films.
FIGURE 7 is similarly a SEM-image (5000 x 5000) showing the advantageous effect of molar mass controlled cellulose coating in significantly decreasing surface porosity and roughness of CNF-films.

One aspect of the present invention is a method of improving the reactivity of cellulose and preparing a transportable form of the previous for preparation of thermoplastic, dispersion able or dissolving derivatives, wherein molar mass and molar mass distribution of the cellulose is controlled uniformly to a range between 30 and 300 kDa therefore providing reactive and processable cellulose.

According to an embodiment, the method of improving the reactivity of cellulose comprises controlling (i.e. decreasing) the molar mass of a cellulose raw material via hydrolysis, excluding total hydrolysis, and by performing a long-chain (chain length between C6 and C30, such as C6-C18) fatty acid modification for the molar mass controlled cellulose.

According to one embodiment, the method comprises controlling (i.e. decreasing) the molar mass of a cellulose raw material via hydrolysis, excluding total hydrolysis, and by performing a hydroxyalkylation modification, e.g. hydroxypropylation, hydroxyethylation or hydroxybutylation for the molar mass controlled cellulose.

According to another embodiment of the invention, the hydrolysis is controlled so that the average molecular mass of the cellulose is reduced at least 60 % but not more than 85 % from the molecular mass of the starting raw material. It is preferred that the hydrolysis is controlled so that after the hydrolysis the average molecular mass of the cellulose is between 30 to 300 kDa, preferably between 40 to 200 kDa. It should be noted that the molar mass of the cellulose is indeed controlled, whereby the cellulose is not subjected to total hydrolysis.

As an example, the inventors prepared cellulose palmitates by heterogeneous esterification in pyridine and homogeneous esterification in the solvent of DMAc/LiCl. To see difference in reactivity, esterification was tested for both native softwood sulfite pulp and molar mass controlled cellulose. In addition, not only to focus cellulose reactivity, the inventors also tested these derivatives as potential thermoplastic materials as well in applications where good and stable water vapor barrier properties are needed. It is described herein how the cellulose raw material molar mass has significant effect to cellulose reactivity. Using hydrolyzed cellulose as a starting material, better reaction efficiency was obtained without losing the good properties of the cellulose esters.

As another example, commercial softwood sulphite dissolving grade pulp was treated with ozone to decrease the degree of polymerization. After the ozone treatment the pulp was subjected to hydrogen peroxide treatment aiming to further decrease the degree of polymerization and to reduce the content of carbonyl groups of the pulp.

Thus, according to one embodiment, the cellulose raw material is selected from native softwood pulp, native hardwood pulp, annual plant pulps such as bamboo pulp or straw pulp, softwood sulphite dissolving grade pulp, hardwood sulphite dissolving grade pulp, ozone treated hydrolyzed pulp or enzyme treated pulp.

According to a further embodiment cellulose is hydrolyzed and thus activated by enzymatic treatment, ozone treatment, hydrogen peroxide treatment, alkaline treatment, or other chemical treatment, before performing a long chain fatty acid modification, such as an esterification or hydroxyalkylation.

According to one embodiment the long-chain fatty acid modification comprises either heterogeneous esterification or homogeneous esterification of the cellulose.

In case of homogenous esterification, before step a) the cellulose raw material is dissolved into LiCl/DMAc solution.

According to one embodiment the long chain fatty acid modification comprises heterogeneous etherification of the molar mass controlled cellulose, for example by hydroxyalkylation. The hydroxyalkylation reaction of the activated cellulose was herein subjected in alkaline conditions either with or without inert solvent such as toluene.

The target substitution level can be adjusted based on reaction conditions such as the amount of reagents and reaction time. The purity of washed esters was confirmed by FT-IR and NMR analysis to verify that all unreacted propylene oxide had been removed.

With the MS level 0.7 or higher transparent film can be obtained when activated molar mass controlled cellulose were used.

The target degree of substitution for the cellulose esters was found to be (DS > 0.7) for both heterogeneous esterification and homogeneous esterification in the solvent of DMAc/LiCl. DMAc/LiCl -system can be used to dissolve cellulose without any degradation of cellulose. The purity of washed esters was confirmed by FT-IR and NMR analysis to verify that all unreacted fatty acid had been removed.

Thus, according to one embodiment, a cellulose ester and a cellulose ether obtained by the method as herein described has chain length between C2 and C30, such as C6-C18, and has a total degree of substitution (DS) from 0.7 to 3.

According to DS values of synthesized cellulose palmitate, it can be concluded that the molar mass of starting material has a significant effect to the end product degree of substitution. Both in homogeneous and heterogeneous method, DS values increased when molar masses decreased when similar reaction conditions were used. When pulps 1-3 were used in homogeneous system, degrees of substitution were > 0.7 and the formed cellulose esters were soluble to chloroform. In that case films could be prepared by simple solventcasting and these films have high flexibility and optical transparency. Cellulose esters, which were synthesized in heterogeneous system using hydrolysed cellulose pulp showed also high DS and transparent films could be obtained. However, in that case, the cellulose esters were not fully soluble to chloroform due the uneven distribution of the palmitate functionalization and therefore some insoluble cellulose fibrils were observed.

The tests demonstrates that using the molar mass controlled cellulose as a starting materials, plastic films can be prepared with much lower DS values without external activation or plasticisation. In such case a smaller amount of reagents is needed, which in turn decreases the production costs.

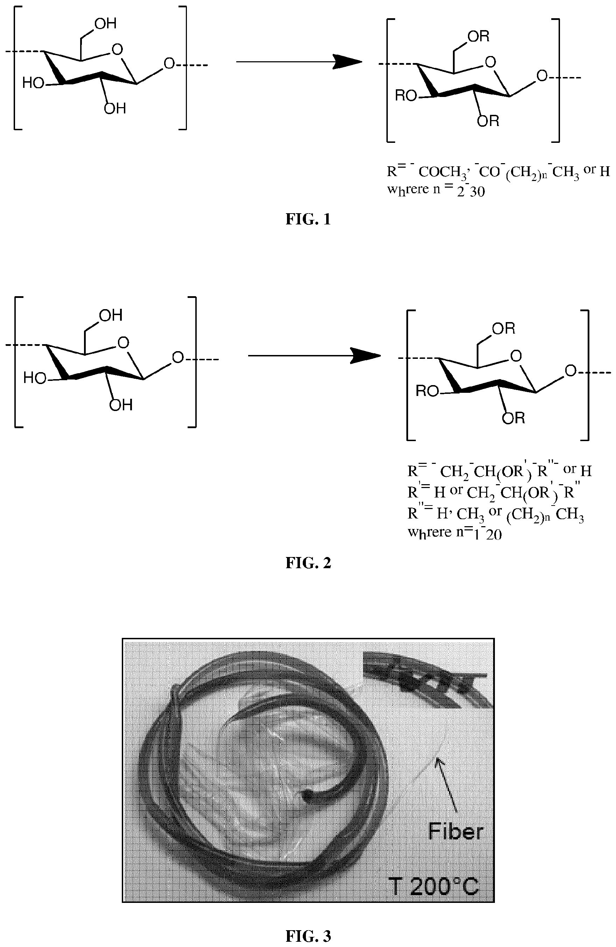

The processability of the cellulose esters was tested with microcompaunder. Translucent and very flexible rod was formed (FIG. 3) and also fiber spinning is possible for the processed sample.

The cellulose palmitate films were also analysed by their contact angle values to determine their hydrophobicity. Contact angles indicate the cellulose ester films degree of wetting when liquid and solid phases are in interaction. When the contact angles are high (> 90 °), the films have low wettability. All measured contact angles were between 97 and 107 °. That means that all our cellulose esters are hydrophobic materials.

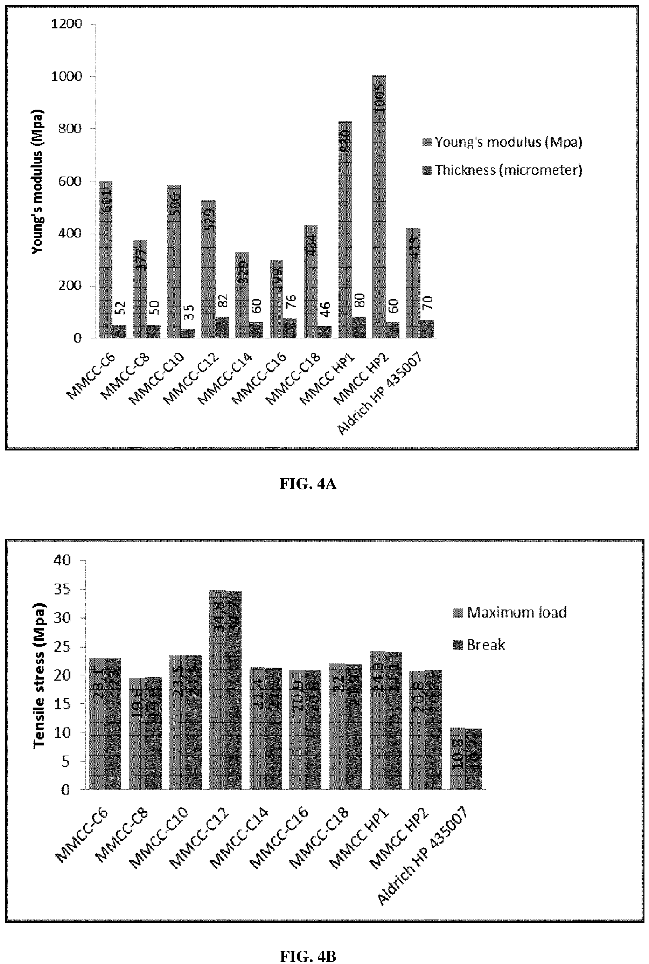

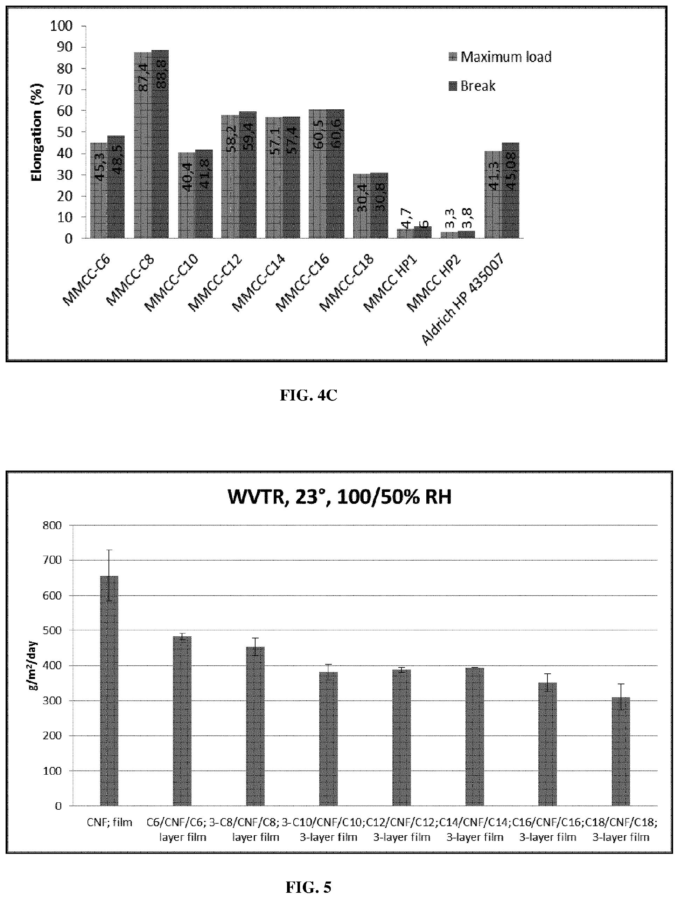

The mechanical properties, E-modulus (E, MPa), tensile strength (σ_{R} MPa) and tensile strain at break (ε_{R}, %), of cellulose ester films were determined by tensile testing (FIG. 4). On the basis of the results it can be concluded that the DS has an effect to the mechanical properties of associated cellulose esters. In general, the higher DS is the better mechanical properties cellulose ester films have.

According to a further embodiment, a cellulose ester has a Young's modulus value of at least 300 MPa, more preferably at least 400 MPa.

Water vapour transmission rate and water vapour permeability were determined by measuring the amount of water vapour transmitted through the cellulose film. According to the WVTR values (FIG. 5), it was concluded that these cellulose esters have excellent water vapour permeability with quite low DS values.

According to one embodiment, a method of producing thermoformable cellulose ester or ether films is characterized by preparing the films from the purified cellulose esters or ethers without using any external plasticizers. However, plasticizers may be used for optimization causes.

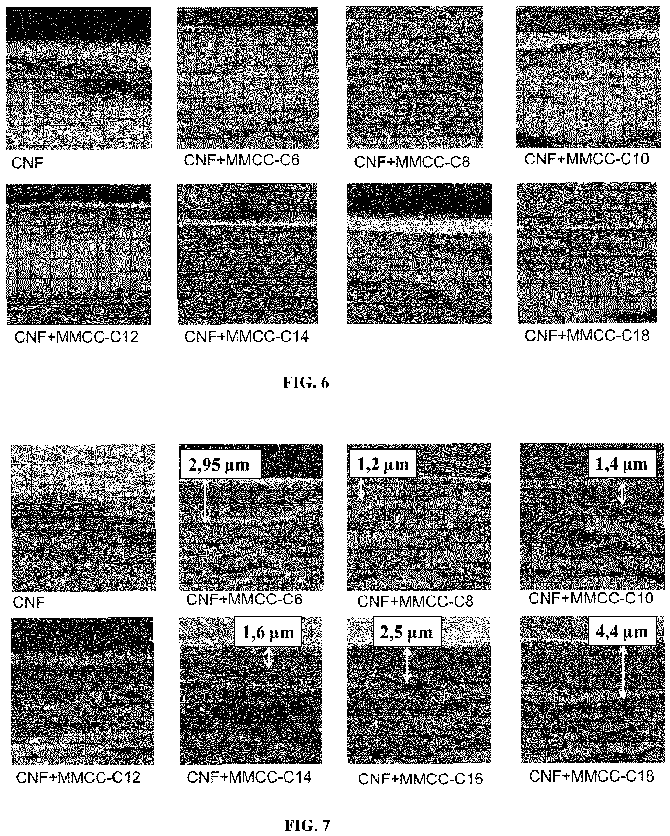

Printed electronics, sensors, solar cells and diagnostics are examples or areas in which the acceptable average surface roughness (Ra) with 1000 x 1000 µm scan area is below 100 nm or even below 20 nm. CNF fine structure (micro- and nanoscale) has crucial role in surface smoothness. Tempo-oxidized CNF with very homogenous and transparent appearance forms smoother films as compared to CNF with opaque and slightly agglomerated structure. It is general knowledge in the art that nanocellulose films typicalle have high porosity. Such micro/nano -roughness, which is more or less natural behavior of any surfaces formed from imperfect dispersions, is in the present invention overcome by using thin coating solutions with zero or close to zero porosity i.e. molar mass controlled cellulose coatings (FIGS. 6 and 7).

Thus, according to an embodiment, a method of producing multilayered film structure comprises coating CNF film from both sides by immersing molar mass controlled C6-C18 cellulose into a multilayered, such as two or three layered, cellulose film structure without using external plasticizers. However, plasticizers may be used for optimization causes.

According to another embodiment, the produced cellulose ester films or multilayer CNF films are heat-sealable. The film structure needs to have a dry thickness of at least 10 µm, more preferably at least 20 µm and most suitably at least 30 µm, in order to ensure the heat-sealability.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in biomaterial manufacturing, such as in producing transparent and colorless films, for example for heat-sealable packaging applications, in foam applications, in electrical coating applications, in medical applications, in composite applications, in non-woven applications, fiber spinning and thermoforming, as well as in/for textiles, fibers, filaments, yarns and cloths. Furthermore, molar mass controlled cellulose coatings applied on a CNF-film provide fully cellulosic and thus also fully bio-based films with high smoothness on both surfaces, applicable for example in printed electronics, sensors, solar cells and diagnostics.

### EXAMPLE 1 - Synthesis of molar mass controlled cellulose

### Ozone treatment

Z-stage was performed in a plastic flow through-reactor in medium consistency. Pulp was added into the reactor, and water was charged and the pulp was mixed when the water addition was done. Initial pH was adjusted with H₂SO₄ and oxygen flow through the reactor was started.

After 10 minutes ozone generator was started (160 A). Ozone generation (about 192 mg/min) in the carrier oxygen gas was first stabilized for 5 minutes. After stabilization ozone flow was lead to the potassium iodide solution (10 min), and after that gas flow was lead into the reactor. Pulp was mixed all the time during the ozone charging. Mixing was started already one minute before the charging and continued for one minute after the charging was finished. Ozone flow was lead again into potassium iodide solution (10 min), and pulp was rinsed with oxygen flow 10 minutes after the reaction time. Ozone formation was determined from potassium iodide solution by titration with Na₂S₂O₃.

### Hydrogen peroxide treatment

P-stage was performed in Teflon coated medium consistency reactor. Preheated pulp was added into the reactor, and after that, reagents were charged, suspension was mixed and initial pH was measured. Mixing speed was 210 r/min. After reaction time pH was measured from the pulp in the reaction temperature, and residual hydrogen peroxide content of the filtrate was determined.

### Alkaline extraction treatment

E-stage was carried out in a plastic jar. Pulp and chemicals was preheated to the reaction temperature and initial pH was measured. Pulp suspension was mixed every 15 minutes. After the reaction time pH was measured from the pulp in the reaction temperature.

### Pulp washing

Washing between stages was a standard laboratory washing: Pulp was diluted to 5% consistency with deionized water, which temperature was the same as that of the preceding bleaching stage. After dewatering, the pulp was washed two times with cold deionized water with amount equivalent to ten times the absolutely dry pulp amount.

The intrinsic viscosity of the pulp was determined by a standard ISO 5351-1. The viscosity test is a means for determining the extent of cellulose degradation produced by cooking and bleaching. The limiting viscosity number of cellulose is determined in dilute cupri-ethylene-diamine (CED) solution. First the pulp sample is continuously shaken in flask containing deionized water and copper pieces until the sample has been completely disintegrated. Then the CED solution is added and shaking is continued until the sample has been dissolved. After this the efflux time of the sample is determined with viscometer. The measurement programme of the viscometer gives automatically the intrinsic viscosity value of the sample.

### Dissolving cellulose to DMAc/LiCl system

Cellulose was dissolved by a method described by Sjöholm et al 2000. Cellulose (2-5 wt-%) was added via solvent-exchange (water/methanol/DMAc sequence) to 5% LiCl/DMAc solution. The mixture was heated to 80 °C for 2 hours and allowed to slowly cool to room temperature. A uniformly transparent cellulose solution was observed.

### Preparation of cellulose palmitate using homogenous method

The homogenous esterifications of the cellulose were conducted by using a method, in which cellulose was first dissolved via solvent-exchange to DMAc/5% LiCl solution. Then anhydrous pyridine (3.6 equivalents to cellulose AGU) was mixed with cellulose solution. Finally palmitoyl chloride (3.0 equivalents to cellulose AGU) was added slowly to the cellulose mixture. The mixture was then warmed to 60 °C and mixing was continued for 16 h at a constant temperature. The product was then precipitated with ethanol, filtered and additionally washed with ethanol and acetone.

### Preparation of cellulose palmitate using heterogenous method

Cellulose and anhydrous pyridine (20 equivalents to cellulose AGU) were mixed together and palmitoyl chloride (3 equivalents to cellulose AGU) was added slowly to the cellulose mixture. The mixture was stirred either overnight at 60 °C or 5h at 100 °C temperature. The product was then precipitated using ethanol, filtered and additional washed with ethanol and with acetone.

### EXAMPLE 2 - Properties of molar mass controlled cellulose

Molar mass controlled cellulose prepared as described above was characterized by using methods generally known in the art. Table 1 shows properties of the initial pulp, and after ozone, hydrogen peroxide and alkaline treatments. Based on SEC measurements hydrolysis was successful in reducing molar mass from 520 kDa to 58 kDa with lower polydispersity.

**Table 1.**

| | Softwood sulphite pulp | Pulp 1 | Pulp 2 | Pulp 3 |
|---|---|---|---|---|
| Mn, kDa | 56 | 28 | 15 | 13 |
| Mw, kDa | 520 | 185 | 80 | 58 |
| PD | 9.3 | 5.8 | 6.3 | 4.3 |

The degree of substitution (DS) of the samples was analysed using solid state ¹³C CP/MAS NMR spectroscopy by comparing the carbonyl carbon integrals with cellulose C1 signal integral with the aid of signal deconvolution. According to the NMR, the DS values of prepared cellulose esters ranged from 0.2 to 1.3 (Table 2).

**Table 2.**

| Entry | Cellulose | Method | Amount^{c} (molar ratio) | DS^{d} |
|---|---|---|---|---|
| 1 | D | homogenous^{a} | 3:1 | 0.2 |
| 2 | Z1 | homogenous^{a} | 3:1 | 1.0 |
| 3 | Z1 | homogenous^{b} | 3:1 | 1.1 |
| 4 | ZP2 | homogenous^{a} | 3:1 | 1.3 |
| 5 | ZP2 | homogenous^{a} | 1.5:1 | 0.1 |
| 6 | D | heterogenous | 3:1 | 0.8 |
| 7^{e} | Z1 | heterogenous | 3:1 | 0.5 |
| 8 | Z1 | heterogenous | 3:1 | 1.0 |
| 9 | Z1 | heterogenous | 6:1 | 1.3 |
| 10 | ZP2 | heterogenous | 3:1 | 1.2 |
| 11 | ZP2 | heterogenous | 6:1 | 1.2 |
| 12 | ZP3 | homogenous^{a} | 3:1 | 1.3 |
| 13 | ZP3 | homogenous^{a} | 3:1 | 1.3 |
| 14 | ZP3 | homogenous^{a} | 3:1 | 1.2 |
| 15 | ZP3 | homogenous^{a} | 3:1 | 0.9 |
| 16 | ZP3 | homogenous^{a} | 3:1 | 1.0 |
| 17 | ZP3 | homogenous^{a} | 3:1 | 0.9 |
| 18 | ZP3 | homogenous^{a} | 3:1 | 0.8 |

| | | | | |
|---|---|---|---|---|
| Reactions were conducted at 100 °C for 5h. ^{a} 2 wt-% cellulose in 5% LiCl/DMAc solution ^{b} 5 wt-% cellulose in 5% LiCl/DMAc solution ^{c} Molar ratio of palmitoyl chloride vs anhydroglucose unit (AGU) ^{d} according to ¹³C CP/MAS NMR ^{e} 60°C, 16h | | | | |

### EXAMPLE 3 - Heat sealability of molar mass controlled cellulose in single and multilayered coatings

Heat sealability of the films was determined using the sealing strength tester (Labormaster HTC 3000, Willi Kopp, Germany). The sealing strength was measured after sealing at 170 °C or 200 °C with a sealing force of 850 kPa, a sealing time of 3 s, a delay time of 20 s, and a peeling rate of 12 m/min. Width of the sample strips was 2 cm. Table 3 presents the heat seal strength of molar mass controlled cellulose ester films expressed as N/m.

**Table 3.**

| Film | Sealing temperature (°C) | Sealing strength (N/m) | Standard deviation (N/m) |
|---|---|---|---|
| C6 | 170 | 132 | 30 |
| C8 | 170 | 183 | 24 |
| C10 | 170 | 0 | 0 |
| C14 | 200 | 265 | 170 |
| C16 | 200 | 290 | 127 |
| C18 | 200 | 0 | 0 |

| | | | |
|---|---|---|---|
| n=2-3 | | | |

Cellulose nanofibrils (CNF) films plasticized with 30% sorbitol were coated (both sides) by immersing in cellulose palmitate WLL VII94B, 2 % in choloroform after which they were dried at ambient conditions. The thickness of CNF film was measured to be 40 um and cellulose palmitate/CNF/cellulose palmitate was 70 um. WVTR of CNF decreased from 850 to 90 g/m²/d by cellulose palmitate coating. OTR of cellulose palmitate decreased from 36000 to 55 cm³/m²/d by incorporating with CNF. OTR of CNF film decreased slightly due to cellulose palmitate coating most likely because of hydrophobic cellulose palmitate layer protects CNF film form swelling.

CNF films were pre-activated using Tantec corona and then coated with C6 (10%), C8 (10%), C14 (7.5%) and C16 (10%) in chloroform using Mayer bar (wet film deposit 100 µm). Coatings were applied either once (dry thickness 10 µm) or three times (dry thickness 30 µm).

Heat sealability of the coated films was determined using the sealing strength tester (Labormaster HTC 3000, Willi Kopp, Germany). The sealing strength was measured after sealing at 170 °C or 200 °C with a sealing force of 850 kPa, a sealing time of 10 s, a delay time of 20 s, and a peeling rate of 0.2 m/min. Width of the sample strips was 5 cm. Table 4 presents the heat seal strength of multilayered films expressed as N/m.

**Table 4.**

| Coated film | Sealing temperature (°C) | Sealing strength (N/m) | Standard deviation (N/m) |
|---|---|---|---|
| CNF + C6 10µm | 170 | 0 | 0 |
| CNF + C6 30µm | 170 | 56 | 9 |
| CNF + C8 10µm | 170 | 0 | 0 |
| CNF + C8 30µm | 170 | 56 | 18 |
| CNF + C14 10µm | 200 | 0 | 0 |
| CNF + C14 30µm | 200 | 65 | 25 |
| CNF + C16 10µm | 200 | 0 | 0 |
| CNF + C16 30µm | 200 | 95 | 31 |

| | | | |
|---|---|---|---|
| n=4-6 | | | |

### CITATION LIST

### Non-patent literature:

Edgar K., Buchanan C., Debenham J., Rundquist .P, Seiler B., Shelton M., Tindall S., Prog. Polym. Sci.2001, 26:1605-1688.
Klemm D., Schmauder H.-P., Heinze T., Cellulose, Biopolymers, 2002. 6: p. 275-319. Wei Y., Cheng F., Hou G., J. Sci. Ind. Res. 2007, 66: 1019-1024.
Crepy L., Chaveriat L., Banoub J., Martin P., Joly N., ChemSusChem, 2009, 2(2), pp. 165-170.
Sjöholm E, Gustafsson K, Erikssin B, Brown W, Colmsjö A (2000) Aggregation of cellulose in lithium chloride/N,N-dimethylacetamide, Polymers 41:153-161.

## Claims

1. A method of improving the reactivity of cellulose and preparing a transportable form of the previous for preparation of thermoplastic, dispersion able or dissolving derivatives, **characterized in that** molar mass and molar mass distribution of the cellulose is controlled uniformly to a range between 30 and 300 kDa, wherein the cellulose is hydrolyzed by enzymatic treatment, ozone treatment, hydrogen peroxide treatment or alkaline treatment, before performing a long chain fatty acid modification, wherein chain length of fatty acid substituents is ≥ C6, providing reactive and processable cellulose.

2. The method of claim 1, **characterized by** controlling molar mass of cellulose raw material via hydrolysis, excluding total hydrolysis.

3. The method of claim 1 or 2, **characterized by** selecting cellulose raw material from native softwood pulp, softwood sulphite dissolving grade pulp, ozone treated hydrolyzed pulp or enzyme treated pulp.

4. The method of any preceding claim, **characterized by** controlling hydrolysis in such manner that after the hydrolysis molar mass and molar mass distribution of the cellulose is in a range between 40 and 200 kDa.

5. The method of any preceding claims, **characterized in that** a long chain fatty acid modification, wherein chain length of fatty acid substituents is ≥ C6, comprises heterogeneous or homogenous esterification of the molar mass controlled cellulose.

6. The method of any preceding claims, **characterized in that** a long chain fatty acid modification, wherein chain length of fatty acid substituents is ≥ C6, comprises heterogeneous etherification of the molar mass controlled cellulose.

7. A method of producing thermoformable cellulose ester films, **characterized by** preparing the films from purified molar mass controlled C6-C18 cellulose esters or ethers, obtained by the method of any of claims 1 to 6.

8. The method of claim 7, **characterized in that** no external plasticizers are used.

9. A method of producing multilayered film structure, **characterized by** coating a CNF film from both sides by immersing molar mass controlled cellulose having chain length of C6-C18 obtained by the method of any of claims 1 to 6 into a multilayered, such as two or three layered, cellulose film structure.

10. The method of claim 9, **characterized in that** no external plasticizers are used.

11. A heat-sealable film structure having a dry thickness of at least 10 µm and produced by the method of any of claims 7 to 10.

12. Use of the molar mass controlled cellulose material, obtained by the method of claims 1-6, 7-8, or 9-10, in film applications, heat-sealable packaging applications, foam applications, electronical coating applications, medical applications, composite applications, non-woven applications, fiber spinning and thermoforming.

## Patentansprüche

1. Verfahren zur Verbesserung der Reaktivität von Cellulose und zur Herstellung einer transportablen Form der vorherigen zur Herstellung von thermoplastischen, dispersionsfähigen oder löslichen Derivaten, **dadurch gekennzeichnet, dass** die Molmasse und die Molmassenverteilung der Cellulose gleichmäßig auf einen Bereich zwischen 30 und 300 kDa gesteuert wird, wobei die Cellulose durch enzymatische Behandlung, Ozonbehandlung, Wasserstoffperoxidbehandlung oder alkalische Behandlung hydrolysiert wird, bevor eine langkettige Fettsäuremodifikation durchgeführt wird, wobei die Kettenlänge der Fettsäuresubstituenten ≥ C6 ist, wodurch eine reaktive und verarbeitbare Cellulose bereitgestellt wird.

2. Verfahren nach Anspruch 1, **dadurch gekennzeichnet, dass** die Molmasse des Celluloserohstoffs durch Hydrolyse gesteuert wird, mit Ausnahme der vollständigen Hydrolyse.

3. Verfahren nach Anspruch 1 oder 2, **dadurch gekennzeichnet, dass** der Celluloserohstoff aus nativer Weichholz-Cellulose, Weichholz-Cellulose mit Sulfitauflösung, ozonbehandelter hydrolysierter Cellulose oder enzymbehandelter Cellulose ausgewählt wird.

4. Verfahren nach einem vorstehenden Anspruch, **dadurch gekennzeichnet, dass** die Hydrolyse so gesteuert wird, dass nach der Hydrolyse die Molmasse und die Molmassenverteilung der Cellulose in einem Bereich zwischen 40 und 200 kDa liegt.

5. Verfahren nach einem der vorstehenden Ansprüche, **dadurch gekennzeichnet, dass** eine langkettige Fettsäuremodifikation eine heterogene oder homogene Veresterung der molmassengesteuerten Cellulose umfasst, wobei die Kettenlänge der Fettsäuresubstituenten ≥ C6 ist.

6. Verfahren nach einem der vorstehenden Ansprüche, **dadurch gekennzeichnet, dass** eine langkettige Fettsäuremodifikation eine heterogene Veretherung der molmassengesteuerten Cellulose umfasst, wobei die Kettenlänge der Fettsäuresubstituenten ≥ C6 ist.

7. Verfahren zur Erzeugung von thermoformbaren Celluloseesterfolien, **dadurch gekennzeichnet, dass** die Folien aus gereinigten, molmassengesteuerten C6-C18-Celluloseestern oder -ethern hergestellt werden, die nach dem Verfahren nach einem der Ansprüche 1 bis 6 erhalten wurden.

8. Verfahren nach Anspruch 7, **dadurch gekennzeichnet, dass** keine externen Weichmacher verwendet werden.

9. Verfahren zur Erzeugung einer mehrschichtigen Folienstruktur, **gekennzeichnet durch** Beschichten einer CNF-Folie von beiden Seiten durch Eintauchen von molmassengesteuerter Cellulose, die eine Kettenlänge von C6-C18 aufweist, die durch das Verfahren nach einem der Ansprüche 1 bis 6 erhalten wurde, in eine mehrschichtige, wie zwei- oder dreischichtige, Cellulose-Folienstruktur.

10. Verfahren nach Anspruch 9, **dadurch gekennzeichnet, dass** keine externen Weichmacher verwendet werden.

11. Heißsiegelfähige Folienstruktur, die eine Trockendicke von mindestens 10 µm aufweist und die nach dem Verfahren nach einem der Ansprüche 7 bis 10 erzeugt wurde.

12. Verwendung des nach dem Verfahren der Ansprüche 1-6, 7-8 oder 9-10 erhaltenen molmassengesteuerten Cellulosematerials in Folienanwendungen, heißsiegelfähigen Verpackungsanwendungen, Schaumstoffanwendungen, elektronischen Beschichtungsanwendungen, medizinischen Anwendungen, Verbundstoffanwendungen, Vliesstoffanwendungen, Faserspinnen und Thermoformen.

## Revendications

1. Procédé d'amélioration de la réactivité de la cellulose et de préparation d'une forme transportable de ce qui précède pour la préparation de dérivés thermoplastiques, dispersibles ou dissolvants, **caractérisé en ce que** la masse molaire et la distribution de masse molaire de la cellulose sont contrôlées uniformément dans une plage comprise entre 30 et 300 kDa, dans lequel la cellulose est hydrolysée par un traitement aux enzymes, un traitement à l'ozone, un traitement au peroxyde d'hydrogène ou un traitement alcalin, avant d'effectuer une modification d'acide gras à longue chaîne, dans lequel la longueur de chaîne de substituants d'acide gras est ≥ C6, fournissant de la cellulose réactive et traitable.

2. Procédé selon la revendication 1, **caractérisé par** le contrôle de masse molaire de matière première de cellulose par hydrolyse, à l'exclusion de l'hydrolyse totale.

3. Procédé selon la revendication 1 ou 2, **caractérisé par** la sélection de matière première de cellulose à partir de pâte de résineux indigène, pâte de qualité dissolvante au sulfite de résineux, pâte hydrolysée traitée à l'ozone ou pâte traitée aux enzymes.

4. Procédé selon une quelconque revendication précédente, **caractérisé par** le contrôle d'hydrolyse de telle manière qu'après l'hydrolyse, la masse molaire et la distribution de masse molaire de la cellulose sont dans une plage comprise entre 40 et 200 kDa.

5. Procédé selon l'une quelconque des revendications précédentes, **caractérisé en ce qu'**une modification d'acide gras à longue chaîne, dans lequel la longueur de chaîne de substituants d'acide gras est >_ C6, comprend une estérification hétérogène ou homogène de la cellulose à masse molaire contrôlée.

6. Procédé selon l'une quelconque des revendications précédentes, **caractérisé en ce qu'**une modification d'acide gras à longue chaîne, dans lequel la longueur de chaîne de substituants d'acide gras est >_ C6, comprend une éthérification hétérogène de la cellulose à masse molaire contrôlée.

7. Procédé de production de films d'esters de cellulose thermoformables, **caractérisé par** la préparation des films à partir d'esters ou d'éthers de cellulose C6-C18 purifiés à masse molaire contrôlée, obtenus par le procédé selon l'une quelconque des revendications 1 à 6.

8. Procédé selon la revendication 7, **caractérisé en ce qu'**aucun plastifiant externe n'est utilisé.

9. Procédé de production de structure de film multicouche, **caractérisé par** le revêtement d'un film CNF des deux côtés par immersion de cellulose à masse molaire contrôlée présentant une longueur de chaîne de C6-C18 obtenue par le procédé selon l'une quelconque des revendications 1 à 6 dans une structure de film de cellulose multicouche, tel que deux ou trois couches.

10. Procédé selon la revendication 9, **caractérisé en ce qu'**aucun plastifiant externe n'est utilisé.

11. Structure de film thermoscellable présentant une épaisseur à sec d'au moins 10 µm et produite par le procédé selon l'une quelconque des revendications 7 à 10.

12. Utilisation du matériau de cellulose à masse molaire contrôlée, obtenu par le procédé des revendications 1-6, 7-8 ou 9-10, dans des applications de film, applications d'emballage thermoscellable, applications de mousse, applications de revêtement électronique, applications médicales, applications composites, applications non tissées, filage de fibres et thermoformage.
